# EUROPEAN PATENT SPECIFICATION

(11) **EP 0 889 633 B1**
(45) Date of publication and mention of the grant of the patent: **09.04.2003**
(21) Application number: 98305733.2
(22) Date of filing: 06.07.1998
(51) Int. Cl.: H04N 1/00, H04N 1/38

(54) **Method and apparatus for scanning documents**
Verfahren und Vorrichtung zum Scannen von Dokumenten
Procédé et appareil de balayage des documents

(30) Priority: 04.07.1997 KR 9730925
(43) Date of publication of application: 07.01.1999
(73) Proprietor: SAMSUNG ELECTRONICS Co. Ltd., Kyungki-do, Seoul (KR)
(72) Inventor: Kim, Han-sin, Seocho-gu, Seoul (KR)
(74) Representative: Lunt, Mark George Francis

(56) References cited:
- EP-A- 0 371 744
- EP-A- 0 497 440
- EP-A- 0 589 136
- EP-A- 0 655 854
- US-A- 3 730 988
- US-A- 5 353 130
- PATENT ABSTRACTS OF JAPAN vol. 017, no. 178 (E-1347), 7 April 1993 (1993-04-07) -& JP 04 331563 A (SEIKO INSTR INC), 19 November 1992 (1992-11-19)

## Description

The present invention relates to a method for scanning documents, and particularly to a method for scanning documents by a machine including a shuttle-scanner that scans documents by back-and-forth motion thereof, wherein, when the document is smaller than a maximum size that can be scanned by the machine, irrelevant data scanned or derived from the area of a document support that is not occupied by the document are considered to represent a blank portion or skipped.

office automation facilities such as a printer, a scanner, etc. are now in wide spread use. To extend their own functions, these office automation facilities each having high efficiency have been developed. Accordingly, the manufacturing costs of the products have increased and this may impose an economic burden on users.

Conventionally, a multifunctional machine optionally includes a scanner, a printer, a modem and a computer and so on and prints data scanned by the scanner or data transmitted from another system through the modem by the printer or stores the data on a suitable storage medium such as a hard disk of a computer.

The multifunctional machine optionally comprises the functions of a fax machine, a printer, a scanner or a duplicator (photocopier).

To interface with a personal computer (PC), the multifunctional machine, such as a multifunctional printer, supports an IEEE 1284 interface which also supports bi-directional communication.

A method for scanning documents by a multifunctional machine wherein, for example, a facsimile, a shuttle-scanner and an ink-jet printer are integrally formed will be described hereinafter.

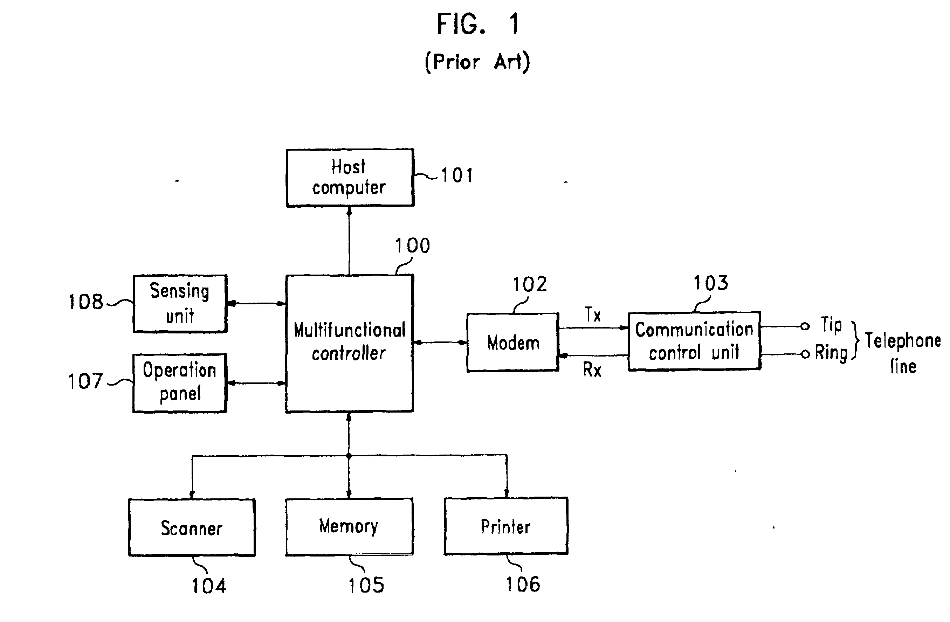

Figure 1 is a block diagram of a conventional multifunctional machine system. The conventional multifunctional machine system includes: a multifunctional controller 100 for performing controlling operations according to a predetermined program, for example, controlling duplicating, transmitting and/or receiving operations of image data of a document during a printing operation; a memory 105 for accessing or storing the image data and received data under the control of the multifunctional controller 100; an operation panel 107 including a plurality of keys for generating function key data for the system and a display unit for displaying the key data generated by the plurality of keys input into the multifunctional controller 100 and also displaying display data generated by the multifunctional controller 100; a scanner 104 for scanning image of a document and supplying the multifunctional controller 100 with digital image data; a modem 102 for modulating output data from the multifunctional controller 100 into analogue data and demodulating received analogue data into digital data under the control of the multifunctional controller 100; a communication control unit 103 for managing external communications via, for example, telephone line and interfacing modulated-demodulated signals and signals of the telephone line under the control of the multifunctional controller 100; a host computer 101 for supplying the multifunctional controller 100 with printing data; a printer 106 for printing and duplicating the document image data read from the scanner 104, data received through the modem 102 and the printing data of the host computer 101 according to control signals received from the multifunctional controller 100; and a sensing unit 108.

The multifunctional controller 100 further includes: a central processing unit (CPU) for duplicating the document image data and compressing data for transmission or storage and decompressing received data during printing operations; a data RAM for temporarily storing the image data compressed by the CPU; and a program ROM including program data and communication protocol data.

When the document to be scanned in such a conventional multifunctional machine is smaller than the maximum document size that can be scanned by the machine, for example, when an A5 sized document is to be scanned in a conventional multifunctional machine capable of scanning up to A4 sized documents, the scanner in the machine also scans the exposed portion of the document support, that is, the area which is not occupied by the A5 sized document. The document support may be a white or black panel. Scanning the document support during a document scanning operation may lead to a significant problem in terms of the amount of data scanned/produced or the time incurred in scanning.

When the document support is a white panel, the serious problem does not materialise. However, when the document support is a black panel, the amount of scanned data is increased, for example, data to be processed at the receiving end of a facsimile, is increased by the amount corresponding to the remaining area of the document support, that is, by the amount of scanned data which represents the document support. Since the remaining area of the black panel that is not occupied by the document is recognised as data, the remaining area is processed as such and transmitted accordingly.

A further problem manifests itself when the white panel is contaminated by sprayed ink. In this case, the white panel cannot perform as intended, that is as a white panel. The contaminants are recognised as data.

Therefore, the conventional multifunctional machine suffers from problems of processing data that are not actually data, which results in unnecessary consumption of printing ink, toner or processing time.

Therefore, it is an object of the present invention to provide a method for scanning documents by a machine, which is capable of processing data relating to or contained within only the document when the document is smaller than a maximum size that can be scanned by the machine.

It is another object of the present invention to provide a method for scanning documents, which is capable of reducing unnecessary consumption of printing ink, toner or processing time.

Accordingly, an aspect of the present invention provides a method for a scanning a document by an apparatus including a scanner that moves back and forth across the document, a document support for the document and a memory for storing scanned data, the method comprising the steps of:
producing, by scanning, a reference block of data corresponding to the document support and storing said scanned block as a reference block in the memory;
producing, by scanning, a shuttle block of data comprising data derived from the document and support;
comparing said reference block with said shuttle block;
determining whether or not data at a present location of the shuttle block corresponds to the scanned document; and
processing data of the shuttle block which precedes the present location if it is determined that the data at the present location of the shuttle block does or does not correspond to the scanned document,
the method being characterised in that the step of determining comprises the steps of:
   dividing said reference block and said shuttle block into N slices, preferably in a direction perpendicular to the direction of progression of said document; and
   determining whether or not the data value of Nth slice of the reference block and the data value of the Nth slice of the shuttle block differ by more than a predetermined value.

An embodiment of the present invention provides that a block of a document support of a machine including a scanner that moves back and forth is scanned and the scanned block of the document support is stored as a reference block. Then, a document to be scanned is placed on the document support and scanned by the machine and a shuttle block is generated. The reference block is compared with the shuttle block. Thereby, the rightmost location of the document is detected. Data before the rightmost location are processed as document data and data after the rightmost location are processed white or skipped.

For example, to detect the rightmost location, the shuttle block and the reference block are compared slice by slice. When the same data of a slice of the reference block and a slice of the document block are larger than a predetermined value, the location of the slice having the same data is determined as the rightmost location.

The document is divided into a predetermined number of shuttle blocks and the above steps are repeatedly carried out for the respective shuttle blocks until the document has been processed.

The method for scanning documents according to the present invention can be applied to a multifunctional machine including a scanner module and a printer unit that are moved back and forth. The scanner module is moved in a direction that is perpendicular to the direction of progression of the document and that is the same as the printing direction.

An embodiment of the present invention will now be described by way of example only with reference to the accompanying drawings in which:
figure 1 is a schematic block diagram of a conventional multifunctional machine system;
figure 2 illustrates a driving unit with a shuttle scanner module loaded thereon of a multifunctional machine for use in the present invention;
figure 3 illustrates a document to be scanned that is divided in to 27 shuttle blocks in the progressing direction of the document;
figure 4 illustrates a shuttle block of figure 3 that is divided into 2481 slices; and
figure 5 is a flow chart of a method for scanning a document according to an embodiment of the present invention.

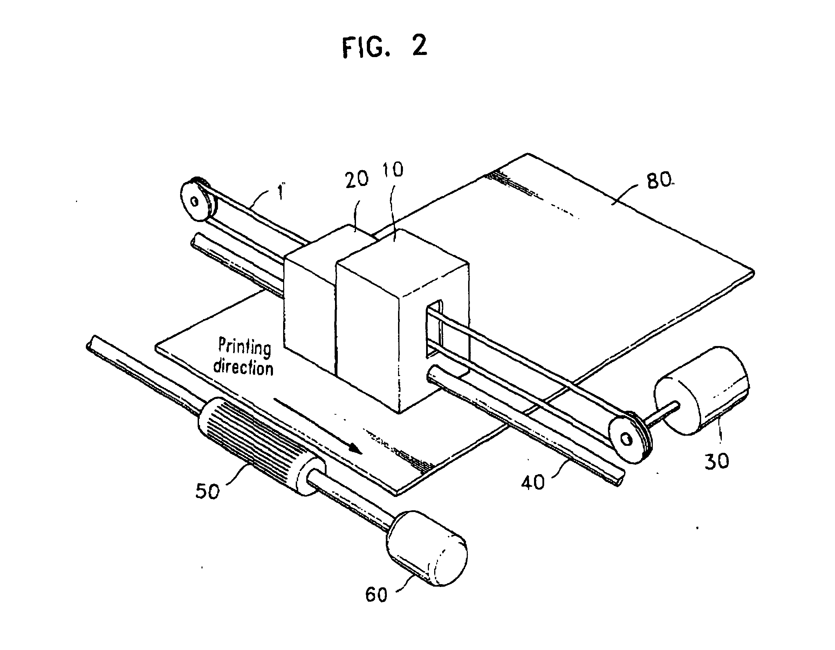

Figure 2 illustrates a driving unit with a shuttle scanner module loaded thereon of a multifunctional machine for use in the present invention. The operation of the multifunctional machine will be described in detail with reference to figure 2. As shown in figure 2, the multifunctional machine used in the present invention includes: a scanner module 10 for scanning characters and graphical data recorded on a predetermined document 80; a printer head 20 for printing scanned data and printing data; a carriage return motor 30 for moving the scanner module 10 and the printer head 20 in a direction perpendicular to the direction progression of the document 80; a supporting shaft 40 for supporting the scanner module 10 and the printer head 20 when they are moving; a line feed roller 50 for press-feeding the document 80 to be printed or scanned; and a line feed motor 60 for the document 80. There is also shown a conveyor belt 1 for moving the scanner module 10 and the printer head 20 back and forth.

Since the scanner module 10 and the printer head 20 are commonly supported by the supporting shaft 40, the scanner module 10 and the printer head 20 can be driven by a single carriage return motor 30. A charged coupled device (CCD) of the scanner module 10 has a size of 128 X 1 dots. Accordingly, when an A4 sized document having the size of 2481 X 3507 dots in the case of 300 DPI is scanned by the CCD, the A4 sized document is divided into 27 shuttle blocks in the direction of progression. Each of the shuttle blocks is divided into 2481 slices, i.e., from the 1^{st} slice to the 2481^{st} slice in the direction perpendicular to the direction of progression of the document, that is, the A4 sized document is scanned in such a manner that the 1^{st} slice of the 1^{st} shuttle block to the 2481^{st} slice of the 27^{th} shuttle block are scanned in the direction perpendicular to the document progression direction.

Accordingly, to scan the document entirely, the scanner module 10 first scans the 1^{st} shuttle block. When the 1^{st} shuttle block has been completely scanned, the line feed motor 60 increases the shuttle block by one in the document progression direction. Then, the scanner module 10 performs the same scanning operation in relation to the 2^{nd} shuttle block. To scan one shuttle block, the scanner module 10 moves back and forth according to the operation of the carriage return motor 30 in the direction perpendicular to the direction of progression of the document. During the back-and-forth movement of the scanner module 10, the first slice to the final slice of one shuttle block currently being processed is scanned.

A preferred embodiment of the present invention, utilises a scanner module which is capable of scanning up to A4 sized document.

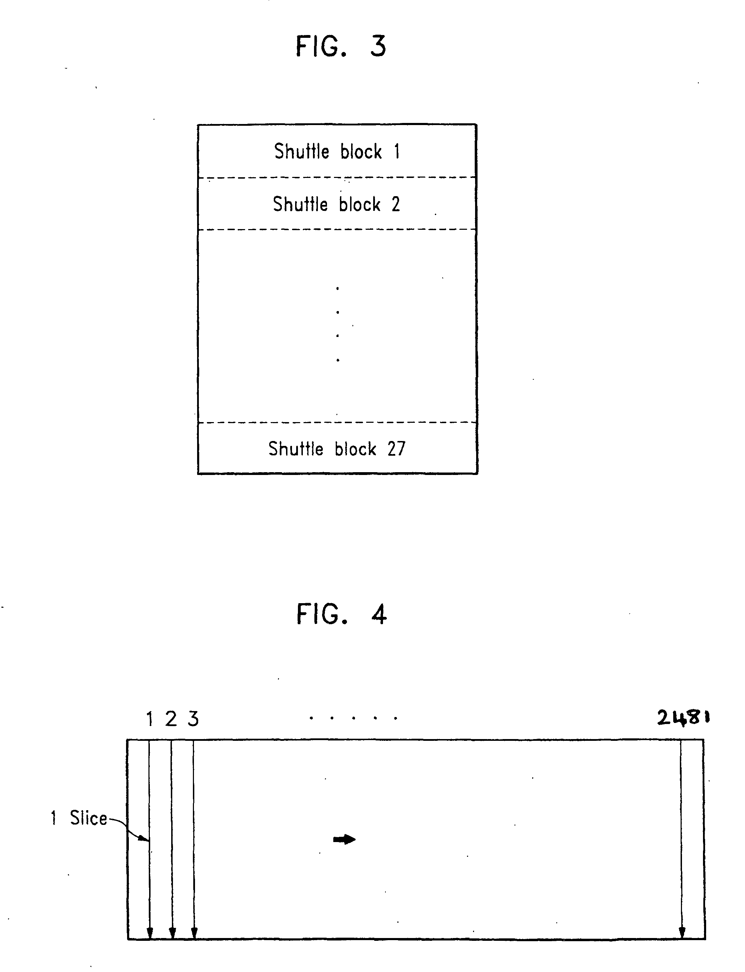

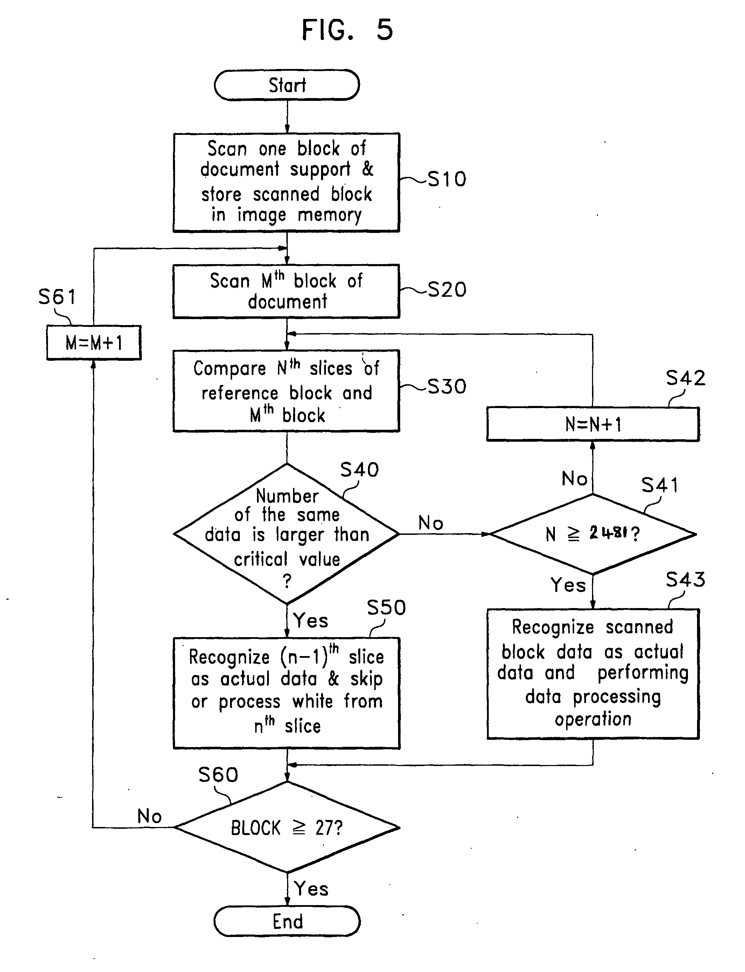

Figure 3 illustrates a document divided into 27 shuttle blocks to be scanned. Figure 4 is a shuttle block divided into 2481 slices. Figure 5 is a flow chart of a method for scanning documents according to an embodiment present invention.

Referring to figure 5, at step S10, the scanner module 10 scans a block corresponding to the document support. The scanned block is stored in an image memory as a reference block. The size of the reference block depends on the scanning performance of the scanner module 10. In the present embodiment, the reference block has a size of 128 X 1 X 2481 dots, that is, a width size of a A4 sized document.

Thereafter, the 1^{st} slice to the 2481^{st} slice of an M^{th} shuttle block of a document are scanned by moving the scanner module 10 back and forth in the direction perpendicular to the direction of progression of document at step S20.

At step S30, the scanned M^{th} shuttle block is compared with the reference block stored in the image memory on a slice-by-slice basis.

A determination is made at step s40 whether or not the N^{th} slice of the reference block and the Nth slice of the scanned M^{th} shuttle block differ by a predetermined critical value. In an embodiment, the determination made at step s40 is whether or not the data value of the N^{th} slice of the reference block is greater than the data value of the N^{th} slice of the M^{th} scanned block by the predetermined value.

If it is determined at step S40 that the N^{th} slice of reference block differs from the N^{th} slice of the scanned block by a value which is less than the predetermined value, the N^{th} slice is deemed to still form part of the document being scanned. Accordingly, it is determined whether or not the number N is larger than 2481, that is, the rightmost location of an A4 sized document at step S41.

If it is determined that the number N is smaller than 2481 at step S41, that is, if the N^{th} slice is not the rightmost slice of the document, the number of the N^{th} slice is increased by one at step S42 which is followed by step S30 to compare the (N+1)^{th} slice of the M^{th} block with the (N+1)^{th} slice of the reference block.

If it is determined that the present slice number is the same as or larger than 2481 at step S41, that is, if the N^{th} slice is the rightmost slice of the document, this means that the presently inserted document has the maximum size that can be scanned in the machine. Accordingly, the entire block data read in the present shuttle block is recognised and processed as actual data of the document at step S43.

Thereafter, it is determined whether or not the number M of the present shuttle block is larger than 27 that is the number of the final shuttle block of the document at step S60. If it is determined that the present shuttle block is not the final shuttle block, i.e., the 27^{th} shuttle block at step S60, the number M of the present shuttle block is increased by one at step S61 which is followed by step S20 so that processing of the (M+1)^{th} shuttle block can commence. The following shuttle block, i.e., 'the (M+1)^{th} shuttle block, is scanned at step S20. Then, the slices of the (M+1)^{th} shuttle block scanned at step S20 are compared with the slices of the reference block from the 1^{st} slice to the 2481^{st} slice thereof one by one.

If it is determined that the number M of the following shuttle block is the same as or larger than 27 at step S60, this means that the final shuttle block has been completely scanned. Accordingly, the scanning operation is terminated.

Otherwise, if at step S40 it is determined at step S40 that the N^{th} slice of reference block differs from the N^{th} slice of the scanned block by a value which is greater than or equal to the predetermined value, the location of the present slice deemed not to form part of the document, i.e., the present slice is deemed to form part of the document support scanned at step S10.
Accordingly, only data of the slices preceding the present slice are recognised and processed as actual document data. That is, the actual size of the scanned document is indicated by the number if the preceding slice. Accordingly, there is no more data to be recognised from the present slice. The data from the present slice is processed white when it is transmitted to a facsimile, or the remaining data are skipped when it is subsequently processed such as, for example, when it is uploaded into a PC.

Advantageously, the present invention is capable of preventing unnecessary consumption of printing ink or toner for processing unnecessary data derived from a source, such as the document support, other than a document to be scanned in the event that the document is smaller than a maximum scannable size document capable of being processed by the apparatus.

## Claims

1. A method for a scanning a document by an apparatus including a scanner that moves back and forth across the document, a document support for the document and a memory for storing scanned data, the method comprising the steps of:
producing, by scanning, a reference block of data corresponding to the document support and storing said scanned block as a reference block in the memory;
producing, by scanning, a shuttle block of data comprising data derived from the document and support;
comparing said reference block with said shuttle block;
determining whether or not data at a present location of the shuttle block corresponds to the scanned document; and
processing data of the shuttle block which precedes the present location if it is determined that the data at the present location of the shuttle block does or does not correspond to the scanned document,
the method being **characterised in that** the step of determining comprises the steps of:
dividing said reference block and said shuttle block into N slices, preferably in a direction perpendicular to the direction of progression of said document, with N > 1; and
determining whether or not the data value of the Nth slice of the reference block and the data value of the Nth slice of the shuttle block differ by more than a predetermined value.

2. A method as claimed in claim 1, further comprising the step of:
concluding that the present location is the rightmost location of the scanned document if the difference between the data of the respective slices is larger than the predetermined value.

3. A method as claimed in either of claims 1 or 2, further comprising the steps of:
determining whether or not the position of the present location is greater than or equal to a predetermined number;
concluding that entire shuttle block corresponds to data derived from the scanned document, if the data of respective slices does not differ by more than the predetermined value and the position of the present location is greater than or equal to the predetermined number.

4. A method as claimed in any preceding claim, further comprising the steps of:
processing the data of the shuttle block which was not derived from the scanned document as data of a particular type, for example, as white data; or
omitting, preferably skipping, the data of the shuttle block which was not derived from the scanned document.

5. A method as claimed in any preceding claim, further comprising the steps of:
dividing the document into a predetermined number of shuttle blocks; and repeating the steps of any preceding
claim for each of the predetermined number of shuttle blocks.

## Patentansprüche

1. Verfahren zum Scannen eines Dokuments mit Hilfe eines Gerätes, das einen Scanner, der sich über das Dokument vorund zurückbewegt, eine Dokumenten-Auflage für das Dokument und einen Speicher aufweist, um die gescannten Daten zu speichern, wobei das Verfahren die Schritte umfasst:
Erzeugen, durch Scannen, von einem Referenz-Block aus Daten, die der Dokumenten-Auflage entsprechen, und Speichern des gescannten Blocks als einen Referenz-Block in dem Speicher;
Erzeugen, durch Scannen, von einem Shuttle-Block aus Daten, die Daten enthalten, die aus dem Dokument und aus der Auflage abgeleitet sind;
Vergleichen des Referenz-Blocks mit dem Shuttle-Block;
Bestimmen, ob Daten an einer bestimmten Stelle des Shuttle-Blocks dem gescannten Dokument entsprechen oder nicht; und
Verarbeiten der Daten des Shuttle-Blocks, die der aktuellen Stelle vorausgehen, wenn bestimmt ist, dass die Daten an der aktuellen Stelle des Shuttle-Blocks dem gescannten Dokument entsprechen oder nicht;
wobei das Verfahren **dadurch gekennzeichnet ist, dass** der Schritt des Bestimmens die Schritte umfasst:
Aufteilen des Referenz-Blocks und des Shuttle-Blocks in N Scheiben, vorzugsweise in einer Richtung senkrecht zu der Vorschubrichtung des Dokuments, wobei N > 1 ist; und
Bestimmen, ob der Datenwert der N-ten Scheibe des Referenz-Blocks und der Datenwert der N-ten Scheibe des Shuttle-Blocks sich um mehr als einen vorbestimmten Wert unterscheiden oder nicht.

2. Verfahren nach Anspruch 1, außerdem mit dem Schritt:
Schlußfolgern, dass die aktuelle Stelle die am weitesten rechts liegende Stelle des gescannten Dokuments ist, wenn der Unterschied zwischen den Daten der jeweiligen Scheiben größer als der vorbestimmte Wert ist.

3. Verfahren nach einem der Ansprüche 1 oder 2, außerdem mit den Schritten:
Bestimmen, ob die Position der aktuellen Stelle größer oder gleich einer vorbestimmten Zahl ist;
Schlußfolgern, dass der gesamte Shuttle-Block den Daten entspricht, die aus dem gescannten Dokument abgeleitet sind, wenn sich die Daten der jeweiligen Scheiben um nicht mehr als den vorbestimmten Wert unterscheiden und die Position der aktuellen Stelle größer oder gleich der vorbestimmten Zahl ist.

4. Verfahren nach einem der vorhergehenden Ansprüche, außerdem mit den Schritten:
Verarbeiten der Daten des Shuttle-Blocks, die nicht von dem gescannten Dokument abgeleitet sind, als Daten von einem bestimmten Typ, beispielsweise als weiße Daten; oder
Weglassen, vorzugsweise Überspringen, der Daten des Shuttle-Blocks, die nicht von dem gescannten Dokument abgeleitet sind.

5. Verfahren nach einem der vorhergehenden Ansprüche, außerdem mit den Schritten:
Aufteilen des Dokuments in eine vorbestimmte Zahl von Shuttle-Blöcken; und Wiederholen der Schritte nach einem der vorhergehenden Ansprüche für jede vorbestimmte Zahl von Shuttle-Blöcken.

## Revendications

1. Procédé permettant de balayer un document à l'aide d'un appareil qui comprend un module de balayage qui se déplace dans les deux sens au-dessus d'un document, un support de document pour le document et une mémoire qui permet de stocker les données balayées, le procédé comprenant les étapes de :
production, par un balayage, d'un bloc de référence de données correspondant au support de document et stockage dudit bloc balayé en tant que bloc de référence dans la mémoire ;
production, par balayage, d'un bloc de navette de. données comprenant des données dérivées du document et du support ;
comparaison dudit bloc de référence audit bloc de navette ;
détermination si les données situées à un emplacement actuel du bloc de navette correspondent ou pas au document balayé ; et
traitement des données du bloc de navette qui précède l'emplacement actuel s'il est déterminé que les données situées à l'emplacement actuel du bloc de navette correspondent ou pas au document balayé,
le procédé étant **caractérisé ce que** l'étape de détermination comprend les étapes de ;
division dudit bloc de référence et dudit bloc de navette en N tranches, de préférence dans une direction perpendiculaire à la direction de la progression dudit document, avec N > 1 ; et
détermination si la valeur des données de la N^{ème} tranche du bloc de référence et la valeur des données de la N^{ème} tranche du bloc de navette diffèrent par plus qu'une valeur prédéterminée.

2. Procédé selon la revendication 1, comprenant de plus l'étape de :
conclusion que l'emplacement actuel est l'emplacement situé le plus à droite du document balayé si la différence entre les données des tranches respectives est supérieure à la valeur prédéterminée.

3. Procédé selon l'une quelconque des revendications 1 ou 2, comprenant de plus les étapes de:
détermination si la position de l'emplacement actuel est supérieure ou égale, ou pas, à un nombre prédéterminé ;
conclusion que le bloc de navette entier correspond aux données dérivées du document balayé, si les données des tranches respectives ne diffèrent pas par plus que la valeur prédéterminée et si la position de l'emplacement actuel est supérieure ou égale au nombre prédéterminé.

4. Procédé selon l'une quelconque des revendications précédentes, comprenant de plus les étapes de :
traitement des données du bloc de navette qui n'ont pas été dérivées du document balayé comme étant des données d'un type particulier, par exemple, comme étant des données de blanc ; ou
omission, ou de préférence saut, des données du bloc de navette qui n'ont pas été dérivées du document balayé.

5. Procédé selon l'une quelconque des revendications précédentes, comprenant de plus les étapes de :
division du document en un nombre prédéterminé de blocs de navette ; et répétition des étapes de n'importe laquelle des revendications précédentes pour chacun des nombres prédéterminés de blocs de navette.
